# EUROPÄISCHE PATENTSCHRIFT

(11) **EP 4 316 959 B1**
(45) Veröffentlichungstag und Bekanntmachung des Hinweises auf die Patenterteilung: **23.07.2025**
(21) Anmeldenummer: 23189709.1
(22) Anmeldetag: 04.08.2023
(51) Int. Cl.: B62J 11/00, B62K 21/26

(54) **LENKERGRIFF**
HANDLEBAR HANDLE
POIGNÉE DE GUIDON

(30) Priorität: 04.08.2022 DE 102022119624
(43) Veröffentlichungstag der Anmeldung: 07.02.2024
(73) Patentinhaber: MPR GmbH & Co. KG, 95615 Marktredwitz (DE)
(72) Erfinder: Pürner, Marcus, Marktredwitz (DE)
(74) Vertreter: Tesch, Sabine

(56) Entgegenhaltungen:
- EP-A1- 2 840 015
- EP-A1- 3 647 172
- WO-A1-2007/020020
- WO-A1-2011/021132
- FR-A- 1 011 130
- FR-A- 395 527
- US-A1- 2020 283 087
- US-B1- 9 908 227
- US-B2- 7 958 804

## Beschreibung

### Gebiet der Erfindung

Die Erfindung betrifft einen Griff für einen Fahrradlenker sowie einen hierfür ausgebildeten Stopfen. Weiter betrifft die Erfindung ein Zubehörteil.

### Hintergrund der Erfindung

Fahrradgriffe mit einer Endkappe sind bekannt. So zeigt beispielsweise die Offenlegungsschrift DE 10 2020 134 650 A1 einen Fahrradgriff mit einer Endkappe. Die Endkappe kann dem Verschließen des Griffes dienen und kann gleichzeitig auch verwendet werden, um ein Zubehörteil an dem Griff anzubringen. EP 2 840 015 A1 offenbart die Merkmale des Oberbegriffs von Anspruch 1.

Ein Griff mit einer Endkappe, welche schräg zum Greifteil des Griffes verläuft, ist beispielsweise aus der Offenlegungsschrift EP 2 840 015 A1 bekannt. Bei diesem Griff wird die Endkappe in die außen schräg abgeschnittene Hülse eingesetzt. Nachteilig ist dabei, dass die Endkappe des Greifteil nicht vor Beschädigungen schützt. Des Weiteren wird eine Endkappe verwendet, welche der schrägen Form der Hülse angepasst ist. Die Endkappe kann also nur für den außenseitig schräg verlaufenden Griff, nicht aber für andere Griffe verwendet werden. Dies ist insbesondere von Nachteil, wenn die Aufnahme in der Hülse für die Endkappe zur Anbringung eines Zubehörteils, wie beispielsweise eines Rückspiegels, verwendet werden soll. Es ist dann nämlich nicht möglich, dass ein Zubehörteil mit einem einheitlichen Stopfen bereitgestellt wird, welches sowohl für gerade als auch schräg abgeschnittene Griffe verwendet werden kann.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, ein universell verwendbares System aus Hülse und Stopfen bereitzustellen, bei dem der Stopfen einfach und komfortabel angebracht werden kann und gleichzeitig gut mit der Hülse verbunden ist.

### Zusammenfassung der Erfindung

Die Erfindung wird bereits durch einen Griff für ein Fahrrad sowie ein Zubehörteil nach einem der unabhängigen Ansprüche gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft einen Griff für einen Fahrradlenker. Unter einem Fahrrad wird jedes tretkurbelbetriebene Fahrzeug, also insbesondere auch ein mehrspurige Fahrzeug wie ein Lastenrad verstanden. Weiter kann das Fahrrad einen elektrischen Hilfsmotor haben, also beispielsweise als E-Bike oder Pedelec ausgebildet sein.

Ein derartiges Fahrzeug umfasst einen Lenker, der als Stangenlenker mit zwei Enden ausgebildet ist. Über den Lenker kann das Fahrrad gesteuert werden. Hierfür sind zwei Griffe vorgesehen.

Der Griff umfasst eine auf den Lenker, also die Lenkstange, schiebbare Hülse.

Die Hülse kann insbesondere als Klemmhülse ausgebildet sein. Eine derartige Klemmhülse kann einen geschlitzten Bereich aufweisen, um den eine Klemme gezogen wird. Durch Anziehen der Klemme kann der Griff reibschlüssig auf dem Lenker befestigt werden.

Die Hülse kann ihrerseits mit einer Umhüllung aus einem weicheren Material, beispielsweise einer aufgespritzten Weichkomponente versehen werden.

Durch die Hülse wird eine Mittelachse m_{H} definiert. Die Mittelachse m_{H} der Hülse stimmt mit der Mittelachse des Lenkers überein. Insbesondere hat die Hülse einen kreiszylindrischen Bereich, welcher auf den Lenker geschoben wird.

Die sonstige Gestaltung der Hülse, bzw. des Greifteils, kann beliebig sein. Insbesondere muss der Griff keine kreiszylindrische Form haben, sondern kann ergonomisch ausgestaltet sein, insbesondere eine Handballenauflage umfassen.

Im montierten Zustand ist in die Hülse ein als Endkappe oder Zubehöraufnahme dienender Stopfen eingesetzt. Der Stopfen wird also nicht, wie es aus der Praxis ebenfalls bekannt ist, in das Lenkerrohr eingeklemmt, sondern ist am äußeren Ende der Hülse selbst eingesetzt und so mit der Hülse verbunden.

Hierzu umfasst die Hülse einen Aufnahmebereich für den Stopfen. Gemäß der Erfindung verläuft eine Mittelachse m_{A} des Aufnahmebereichs in einem schrägen Winkel α zur Mittelachse m_{H}.

Im Unterschied zu eingangs beschriebenem Stand der Technik ist also nicht der Stopfen, beispielsweise durch schräg verlaufende Seitenwände, an die schräg außen abgeschnittene Hülse angepasst, sondern der Aufnahmebereich für den Stopfen hat eine Mittelachse m_{A}, welche schräg zur Mittelachse m_{H} verläuft.

Dadurch, dass der Stopfen so nicht der schräg abgeschnittenen Form des Griffes angepasst sein muss, ist es möglich, einen Stopfen bereitzustellen, welcher sowohl für schräg als auch für gerade abgeschnittene Griffe verwendet werden kann.

Der Aufnahmebereich hat vorzugsweise eine kreiszylindrisch ausgebildete Kontur, insbesondere eine kreiszylindrisch ausgebildete Außenfläche.

Um die sich beispielsweise von einem Kreiszylinder durch ein schräges Abschneiden in eine ovale Form verwandelte Schnittfläche zu kompensieren, muss der Aufnahmebereich entsprechend angepasst ausgestaltet werden.

So kann beispielsweise der Aufnahmebereich eine Stufe umfassen. Die Stufe kann insbesondere an dem am weitesten außen liegenden Punkt des Griffes am größten sein und zum am weitesten innen liegenden Punkt auslaufen, insbesondere am weitest innen liegenden Punkt nicht mehr vorhanden sein.

Der Winkel α kann zwischen 3 und 50°, vorzugsweise zwischen 5 und 40° und besonders bevorzugt zwischen 10 und 30° liegen.

Gemäß einer Ausführungsform überragt der Stopfen das Ende der Hülse. Der Stopfen ragt also aus dem Aufnahmebereich seitlich heraus und schützt so die Hülse vor Beschädigungen. Im Falle einer Beschädigung kann der Stopfen relativ leicht ausgetauscht werden.

Der Stopfen kann auch im Querschnitt den Umfang der Hülse überragen, insbesondere nach vorne, bezogen auf die Fahrtrichtung.

Gemäß einer bevorzugten Ausführungsform ist der Stopfen formschlüssig mit der Hülse verbunden, insbesondere über einen Bajonettverschluss.

Die Offenbarung betrifft des Weiteren eine Anordnung mit einem Griff wie vorstehend beschrieben, wobei die Anordnung eine weitere Hülse mit einem Aufnahmebereich für den Stopfen umfasst. Im Unterschied zu vorstehend beschriebener Hülse ist bei dieser Hülse der Aufnahmebereich koaxial zur Mittelachse der Hülse ausgerichtet.

Der Stopfen kann für beide Hülsen verwendet werden.

Gemäß einem weiteren Aspekt der Offenbarung betrifft diese einen Griff für einen Fahrradlenker, welcher eine auf den Lenker schiebbare Hülse umfasst, wobei in die Hülse ein als Endkappe oder Zubehöraufnahme dienender Stopfen eingesetzt ist. Der Stopfen kann also zum einen als Blende zum Verschließen des Griffes dienen. Zum anderen kann der Stopfen Teil eines Zubehörteils, z.B. eines Rückspiegels, sein und so dem Befestigen des Zubehörteils an der Hülse dienen.

Der Stopfen ist mittels eines Bajonettverschlusses mit der Hülse verbunden.

Die Verwendung eines Bajonettverschlusses ermöglicht ein besonders einfaches Anbringen des Griffes.

Vorzugsweise umfasst der Bajonettverschluss ein Einrastelement. Unter einem Einrastelement wird eine Verbindung verstanden, welche in einem bestimmungsgemäß verbundenen Zustand den Stopfen auf dem Griff derart verrastet, so dass der Stopfen nur gegen einen Widerstand des Einrastelements zurückgedreht werden kann.

Dies ermöglicht zum einen eine besonders feste Verbindung, bei der die Endposition für den Benutzer haptisch wahrnehmbar ist.

Gleichzeitig wird es aufgrund der festen Verbindung möglich, den Stopfen auch als Teil eines Zubehörteils, wie beispielsweise eines Rückspiegels, zu verwenden.

Das Einrastelement kann insbesondere einen Vorsprung umfassen, welcher in einer Vertiefung einrastet.

Vorsprung und Vertiefung können dabei insbesondere an der Stirnseite jeweils einer Wendel der Hülse und des Stopfens angeordnet sein.

Bei dieser Ausführungsform der Erfindung wird das Bajonett also ähnliches eines Gewindes durch zumindest einen, vorzugsweise durch genau zwei Wendel, bereitgestellt. Durch die Wendel ist eine schräge Fläche ausgebildet, die die Bauteile Stopfen und Hülse beim Drehen axial (entsprechend der Achse m_{A} des Aufnahmebereichs) aufeinander zu- bzw. beim Öffnen wegbewegt.

Wenn Formschlusselemente an den Stirnseiten dieser Wendel liegen, so sind diese innenseitig im geschützten Bereich angeordnet und so beispielsweise vor Verschmutzungen geschützt. Auch sind ist Ausgestaltung optisch gut zu erkennen, so dass das Einsetzen einfacher ist.

Es ist insbesondere vorgesehen, dass Stopfen und Hülse jeweils zwei, insbesondere genau zwei, Wendel aufweisen, wobei jede der Wendeln ein Formschlusselement, also entweder einen Vorsprung oder eine Vertiefung, aufweist.

Insbesondere unter Verwendung eines Bajonetts mit zwei Wendeln kann ein Griff bereitgestellt werden, bei welchem sich der Stopfen durch weniger als eine halbe Umdrehung, insbesondere durch etwa eine Viertelumdrehung von dem Griff lösen lässt bzw. bei dem der Stopfen durch eine etwa Viertelumdrehung an der Hülse angebracht werden kann.

So ist ein besonders einfaches Anbringen und wieder Entfernen des Stopfens möglich.

Die Erfindung betrifft des Weiteren ein Set mit zwei Griffen, wie sie vorstehend beschrieben wurden.

Bei dem Set ist ein Griff bei bestimmungsgemäßer Verwendung als linker Griff und ein anderer Griff bei bestimmungsgemäßer Verwendung als rechter Griff ausgebildet.

Die Griffe haben einen identischen Stopfen. Insbesondere ist der Aufnahmebereich der Hülse identisch, aber nicht zwingend spiegelsymmetrisch ausgebildet.

Es ist insbesondere vorgesehen, dass der Stopfen, insbesondere wie vorstehend ausgeführt, ein Bajonettverschluss umfasst. So kann der Stopfen durch Drehen angebracht und entfernt werden.

Bei dem Set ist dabei die Richtung, in der Stopfen gedreht werden muss um verriegelt oder entriegelt zu werden, beim rechten und beim linken Griff identisch.

Es ist wird also nur ein Stopfen benötigt, welcher rechts und links identisch ausgebildet ist.

Die Offenbarung betrifft des Weiteren einen Stopfen für einen oben beschriebenen Griff. Der Stopfen weist in einer Weiterbildung ein Antriebselement auf, welches insbesondere ausgebildet ist zum Zusammenwirken mit einem Handhabungswerkzeug. Bevorzugt ist das Antriebselement als Schlitz ausgebildet, welcher für den Eingriff einer Münze, etwa ein 10 Eurocent-Stück, dimensioniert ist. So kann der Stopfen in besonders einfacher Weise montiert werden.

Die Offenbarung betrifft des Weiteren ein Zubehörteil. Dieses ist als Rückspiegel, als Bedienelement für eine Komponente, wie beispielsweise eine Schaltung, einen elektrischen Unterstützungsantrieb oder eine automatische Sattelhöhenverstellung ausgebildet. Weiter kann das Zubehörteil als Anzeigeeinrichtung ausgebildet sein. Zudem kann das Zubehörteil als Grifferweiterung, insbesondere Hörnchen, als Beleuchtungselement und/oder Blinker ausgebildet sein.

Auch kann der Stopfen Teil eines Werkzeugs sein, das innenliegend, also im Lenkerrohr mitgeführt wird. Der Stopfen sichert dabei das Werkzeug in seiner Position und verschließt gleichzeitig den Griff.

Das Zubehörteil ist für den vorstehend beschriebenen Griff ausgebildet und umfasst insbesondere einen Stopfen, der als Träger für das Zubehörteil dient und der mit der vorstehend beschriebenen Hülse verwendbar ist.

### Kurzbeschreibung der Zeichnungen

Der Gegenstand der Erfindung soll im Folgenden bezugnehmend auf die Zeichnungen Fig. 1 bis Fig. 12 näher erläutert werden.
Fig. 1 ist eine Draufsicht auf ein Ausführungsbeispiel eines erfindungsgemäßen Griffes (Klemme und Weichkomponente nicht dargestellt).
Fig. 2 ist ein mittiger Längsschnitt.
Fig. 3 ist eine Detaildarstellung eines mittigen Längsschnitts des Randbereichs der Hülse gemäß einer ersten Ausführungsform der Erfindung.
Fig. 3A ist eine Detaildarstellung eines mittigen Längsschnitts des Randbereichs der Hülse gemäß einer zweiten Ausführungsform der Erfindung.
Fig. 4 ist eine perspektivische Ansicht auf den Randbereich der Hülse.
Fig. 5 und Fig. 6 sind perspektivische Ansichten des Stopfens gemäß einer ersten Ausführungsform der Erfindung.
Fig. 5A und Fig. 6A sind perspektivische Ansichten des Stopfens gemäß einer zweiten Ausführungsform der Erfindung.
Fig. 7 zeigt eine alternative, nicht erfindungsgemäße Ausführungsform eines Griffes, welcher außenseitig gerade abgeschnitten ist.
Fig. 8 ist ein mittiger Längsschnitt des in Fig. 7 dargestellten Griffes.
Fig. 9 ist eine perspektivische Ansicht des äußeren Endes des in Fig. 7 und Fig. 8 dargestellten Griffes.
Fig. 11 und 12 zeigen jeweils einen linken Griff in der Draufsicht von oben.
Fig. 12 ist eine perspektivische Ansicht eines linken Griffes.
Fig. 13 zeigt eine weitere perspektivische Ansicht des Stopfens gemäß einer dritten Ausführungsform der Erfindung.
Fig. 14A und Fig. 14B zeigen jeweils eine perspektivische Ansicht des Stopfens gemäß der dritten Ausführungsform der Erfindung.

### Detaillierte Beschreibung der Zeichnungen

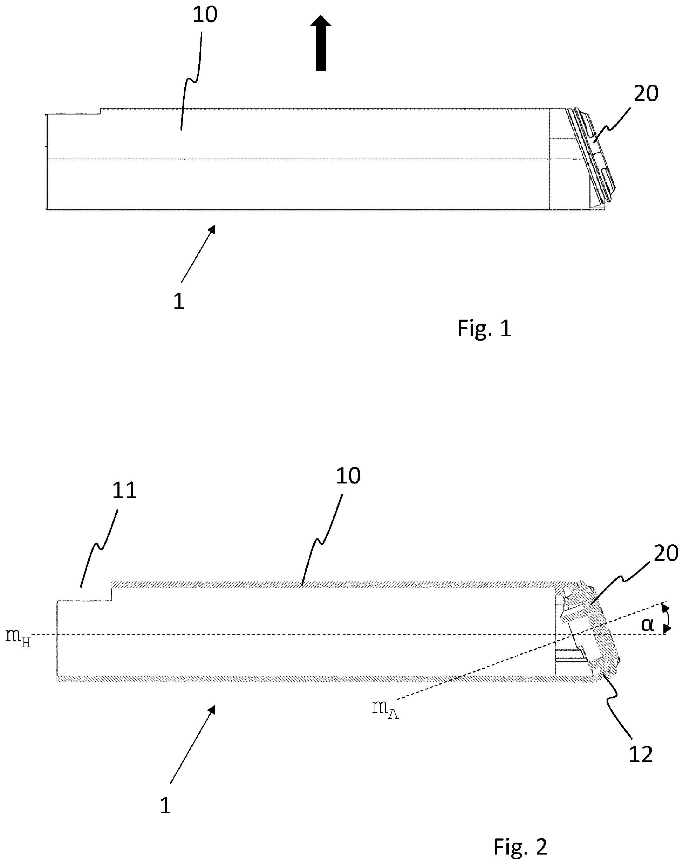

Fig. 1 zeigt in einer Draufsicht von oben ein Ausführungsbeispiel eines erfindungsgemäßen Griffes 1. Die Fahrtrichtung bei bestimmungsgemäßer Verwendung ist mit einem Pfeil markiert.

Der Griff 1 ist an der Außenseite schräg abgeschnitten.

Der Griff 1 wird aus einer Hülse 10 und dem Stopfen 20 gebildet.

Der Stopfen 20 kann abschnittsweise konisch, insbesondere kegelstumpfförmig ausgebildet sein.

Aufgrund der schrägen Anordnung des Stopfens 20 ragt der Stopfen 20 vorne über die Außenwand der Hülse 10 hinaus und schützt so den Hülse 10 bei einem Anstoß.

Fig. 2 ist ein mittiger Längsschnitt des in Fig. 1 dargestellten Griffes.

Die Hülse 10 hat in diesem Ausführungsbeispiel einen kreiszylindrischen Abschnitt, welcher als Greiffläche dient. Hierzu kann die Hülse mit einer Weichkomponente (nicht dargestellt) versehen sein. Es versteht sich, dass die Hülse 10 bzw. der Griff aber eine beliebige Form, insbesondere eine ergonomische Ausgestaltung, haben kann.

Die Hülse 10 ist zur klemmenden Befestigung ausgebildet und umfasst in diesem Ausführungsbeispiel innenseitig einen Schlitz 11.

Im Bereich des Schlitzes 11 kann eine Klemme (nicht dargestellt) auf die Hülse 10 geschoben werden, um die Hülse 10 und damit den Griff 1 klemmend festzulegen.

Innenseitig ist die Hülse 10 zumindest abschnittsweise mit einem kreiszylinderförmigen Kanal versehen, welcher der Aufnahme des Endes des Lenkers (nicht dargestellt) dient.

Hierdurch wird die Mittelachse m_{H} definiert.

Am äußeren Rand umfasst die Hülse 10 einen Aufnahmebereich 12. In den Aufnahmebereich 12 ist der Stopfen 20 eingesetzt.

Der Aufnahmebereich 12 definiert eine Einsetzrichtung für den Stopfen 20.

Hierdurch wird die Mittelachse m_{A} definiert. Die Mittelachse m_{A} liegt insbesondere senkrecht zur Stirnfläche des Stopfens 20.

M_{A} verläuft in einem schrägen Winkel α zu m_{H}. In diesem Ausführungsbeispiel beträgt der Winkel α zwischen 15 und 25°.

Aufgrund der schräg verlaufenden Mittelachse m_{A} braucht der Stopfen 20 nicht der schräg abgeschnittenen Kontur des Griffes 1 angepasst zu sein.

Der Stopfen 20, welcher in diesem Ausführungsbeispiel auch als Verschlussdeckel definiert sein kann, ist vielmehr schräg zu der Mittelachse M_{H} verkippt.

Die Mittelachse des Stopfens 20 entspricht so der Mittelachse m_{A}.

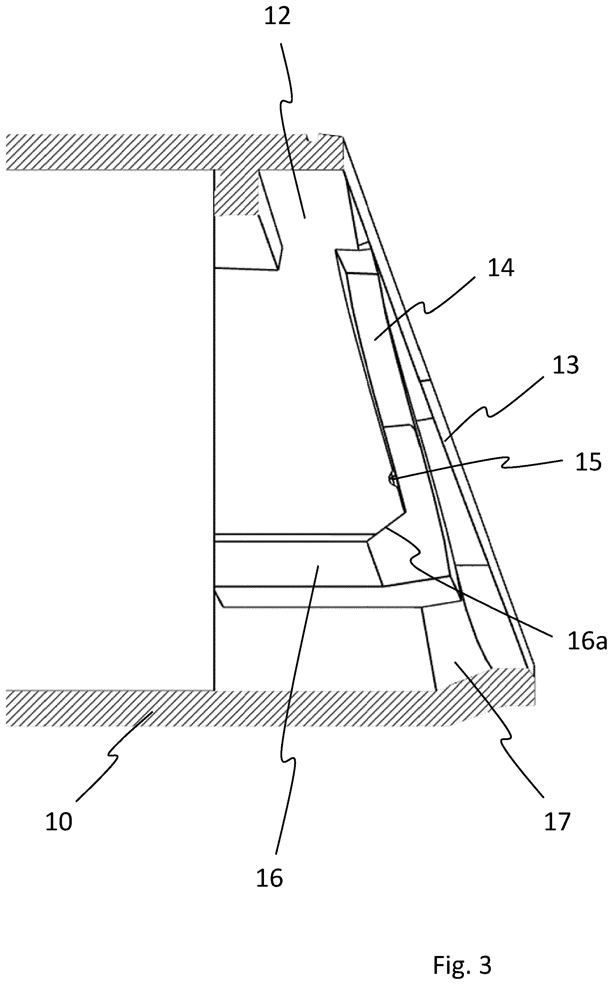

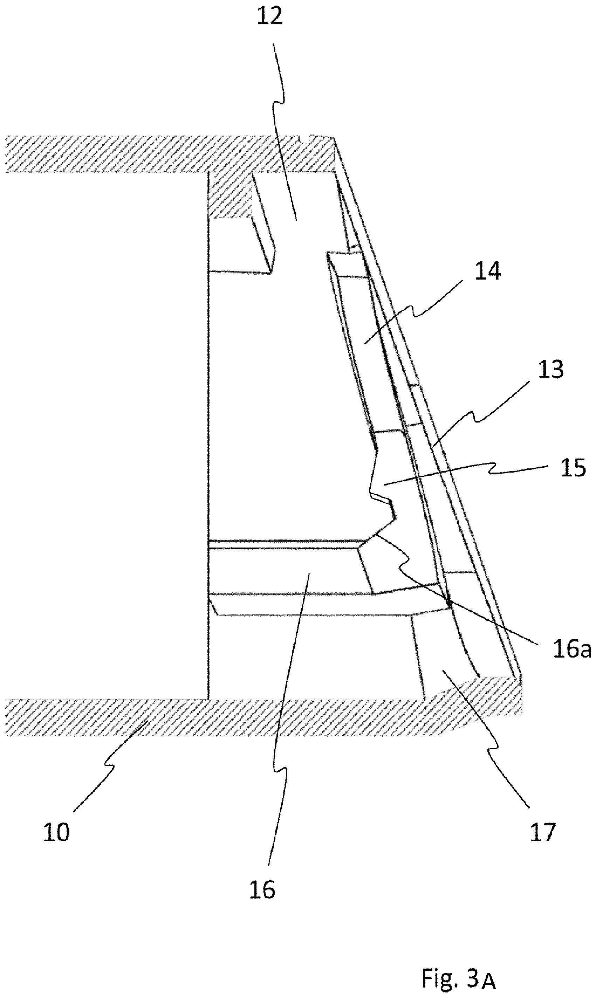

Die Fig. 3 und Fig 3A zeigen jeweils in einer Detaildarstellung einen mittigen Querschnitt der Hülse 10 im Randbereich.

Dargestellt in diesem mittigen Querschnitt ist, dass sich im Aufnahmebereich 12 eine Wendel 14 befindet, welches Teil des Bajonetts ist. Die Wendel 14 bildet eine schräge Fläche, welche in diesem Ausführungsbeispiel in etwa von der Außenfläche 13 des Aufnahmebereichs 12 schräg nach innen verläuft.

Innenseitig hat die Wendel 14 einen Vorsprung 15. Der Vorsprung 15 kann beispielsweise rundlich ausgebildet sein. Eine entsprechende erste Ausführungsform der Erfindung ist in den Abbildungen insbesondere in den Figuren 3, 5 und 6 dargestellt. Gemäß einer zweiten Ausführungsform der Erfindung kann der Vorsprung 15 beispielsweise als Rampe ausgebildet sein, wie dies in den Figuren 3A, 5A und 6A dargestellt ist.

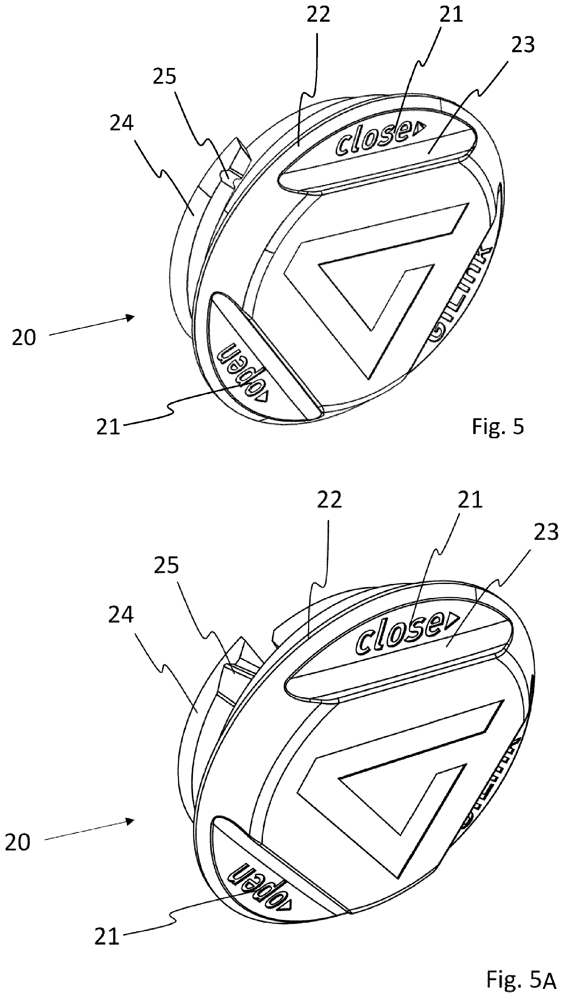

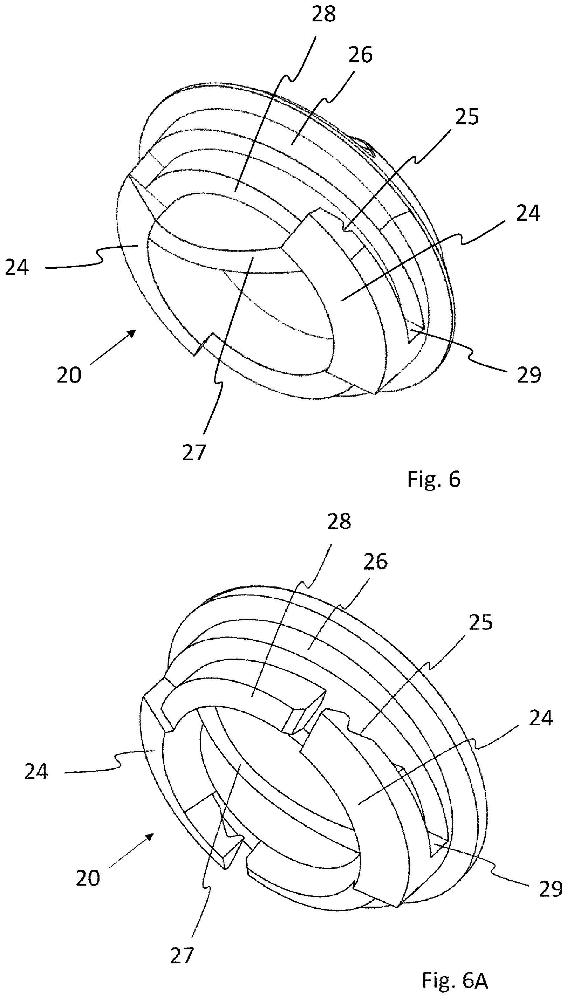

Die Wendel 14 geht in einen sich axial erstreckenden Anschlag 16 über. Am Anschlag 16 kann beispielsweise die Wendel des Stopfens (24 in Fig. 5, 5A, 6 und 6A) zur Anlage kommen.

Weiter kann der Anschlag 16 als Anlagefläche für das Ende der Lenkstange dienen. Der Anschlag 16 steht daher innen über die Wendel 14 hinaus. So wird verhindert, dass Stopfen und Hülse durch den Lenker zusammengepresst werden und die Wendel ist vor Beschädigungen geschützt, wenn das Fahrrad z.B**.** umkippt und mit dem Lenkerende aufschlägt.

Die schräge Fläche 16a dient als Anschlag für die Wendel

Die Wand der Hülse 10 umfasst in diesem Ausführungsbeispiel eine Stufe 17, in der die Wand der Hülse 10 nach innen springt.

Die Stufe 17 ist in dem hier zu sehenden Bereich, der am weitesten außen liegt, am größten und läuft zur gegenüberliegenden Seite hin aus.

Durch diese Ausgestaltung wird ermöglicht, dass der Aufnahmebereich 12 in etwa kreiszylindrisch ausgebildet ist.

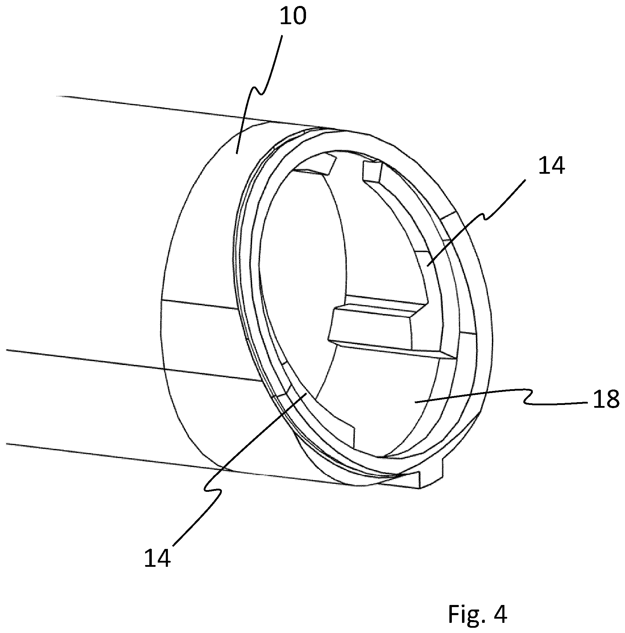

Fig. 4 ist eine perspektivische Detaildarstellung des äußeren Endes der Hülse 10.

In dieser Darstellung ist gut zu erkennen, dass die Hülse 10 randseitig zwei sich gegenüberliegende Wendel aufweist.

Zwischen den Wendeln 14 ist ein freier Bereich 18 vorgesehen.

Durch den freien Bereich 18 können die Wendel des Stopfens (24 in Fig. 5, 5A, 6 und 6A) eingeschoben werden.

Sogar dann wird der Stopfen gedreht und die Wendel der Hülse 14 bilden im Zusammenwirken mit den Wendeln des Stopfens ein Bajonett.

Die Fig. 5 und 5A zeigen jeweils eine perspektivische Ansicht des Stopfens 20.

Der Stopfen 20 ist als Deckel ausgebildet.

Insbesondere kann der Stopfen 20 eine kreisförmige Kontur haben.

In diesem Ausführungsbeispiel ist der Stopfen 20 mit Richtungsmarkierungen 21 versehen. Über die Richtungsmarkierungen 21 kann der Benutzer leicht sehen, in welcher Richtung der Stopfen befestigt wird und in welcher Richtung dieser abgenommen wird.

Der Stopfen 20 umfasst eine Kappe 22. Die Kappe 22 umfasst Griffflächen 23, die das Drehen des Stopfens 20 erleichtern.

Die Griffflächen 23 können als Tangenten eines Kreises um Mittelachse des Stopfens 20 ausgerichtete gerade Flächenelemente ausgestaltet sein.

In diesem Ausführungsbeispiel werden die Griffflächen 23 dadurch bereitgestellt, dass in die kreiszylindrische oder konische Kontur der Kappe 22 drei Einschnitte in der Gestalt von Ausfräsungen eingebracht sind.

Innenseitig umfasst der Stopfen 20 zwei sich gegenüberliegende Wendel 24.

Als Formschlusselement, welches mit dem Vorsprung der Wendel der Hülse zusammenwirkt (15 in Fig. 3 und 3A) ist auf der Innenseite der Wendel 24 eine Vertiefung 25 vorhanden.

In der Vertiefung 25 rastet der Vorsprung der Wendel der Hülse ein.

Die Vertiefung 25 ist in diesem ersten Ausführungsbeispiel als Hohlkehle ausgebildet (siehe Figuren 3, 5 und 6). In einem weiteren Ausführungsbeispiel ist die Vertiefung 25 als Einkerbung ausgebildet (siehe Figuren 3A, 5A und 6A).

Die Fig. 6 und Fig. 6A zeigen jeweils eine perspektivische Ansicht, in welcher die Unterseite des Stopfens 20 zu sehen ist.

Zu erkennen sind die sich gegenüberliegenden Wendel 24, welche jeweils eine Vertiefung 25 aufweisen und welche an einem Sockel 26 des Stopfens angeordnet sind. Die Wendel 24 ergeben sich durch schräge ringsegmentförmige Einschnitte im Sockel 26.

Die Wendel 24 nehmen jeweils in etwa ein Viertelkreissegment ein.

Zwischen den Wendeln 24 befinden sich freie Bereiche 28, in welche beim Verbinden zunächst die Wendel der Hülse greifen.

Die Wendel 24 sind in diesem Ausführungsbeispiel über einen Steg 27 miteinander verbunden, welcher der Stabilisierung des Stopfens 20 dient.

Die Wendel 24 enden bezogen auf die Richtung beim Schließen des Bajonetts an einem Anschlag 29, an dem beispielsweise die Wendel der Hülse zur Anlage kommen kann.

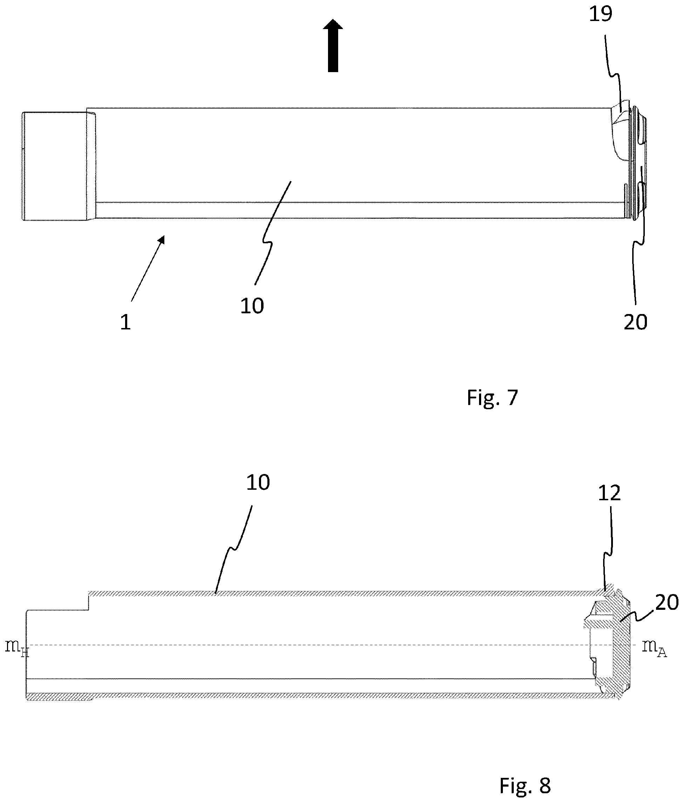

Fig. 7 zeigt einen Griff 1 gemäß einem alternativen, nicht erfindungsgemäßen Ausführungsbeispiel.

Bei diesem nicht erfindungsgemäßen Ausführungsbeispiel ist der Griff 1 außenseitig nicht schräg, sondern gerade abgeschnitten.

Die sonstige Ausgestaltung der Hülse 10 entspricht den vorangegangenen Zeichnungen. Insbesondere ist die Hülse 10 als Klemmhülse ausgebildet und hat neben der randseitig gerade abgeschnittenen Kontur lediglich die folgenden Unterschiede. Vorne, bezogen auf die Fahrtrichtung, ist in diesem nicht erfindungsgemäßen Ausführungsbeispiel die Hülse 10 mit einem Vorsprung 19 versehen.

Der Vorsprung 19 schützt die restliche Hülse 10 vor Beschädigungen.

Aufgrund der gerade abgeschnittenen Kontur ragt, anders als in dem Ausführungsbeispiel gemäß Fig. 1, der Stopfen 20 nicht vorne über die Außenwand der Hülse 10.

Wie in dem mittigen Längsschnitt gemäß Fig. 8 dargestellt, ist nunmehr ein Aufnahmebereich 12 vorgesehen, dessen Achse nicht gegenüber der Mittelachse der Hülse 10 schräg verkippt ist. Der als Deckel ausgebildete Stopfen 20 wird vielmehr koaxial in die Hülse 10 eingesetzt und sodann gedreht, um das Bajonett zu verschließen.

Der Aufnahmebereich 10 ist entsprechend den Zeichnungen Fig. 1 bis Fig. 4 ausgebildet, nur dass dieser keine Stufe oder ähnliches aufweisen muss, um eine kreiszylindrische Kontur zumindest des Einführbereiches auszubilden.

Insbesondere umfasst der Aufnahmebereich 12 ebenfalls zwei Wendel, welche im Zusammenwirken mit den Wendeln des Stopfens 20 ein Bajonett ausbilden.

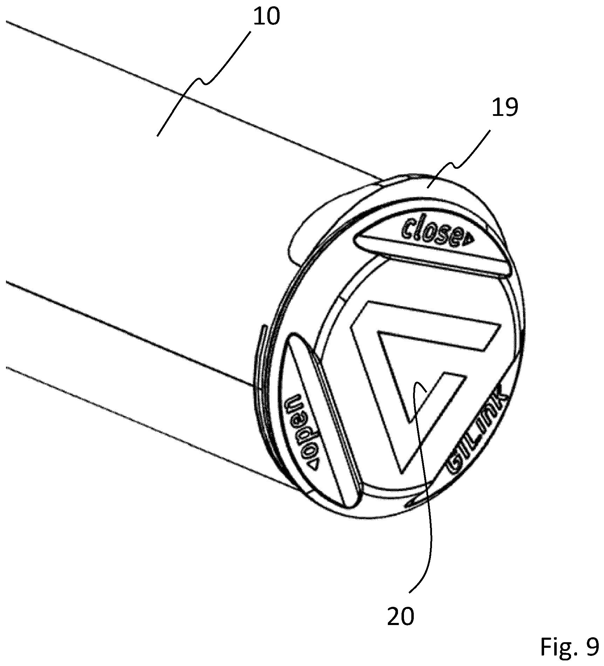

Fig. 9 ist eine perspektivische Ansicht des Randbereiches des Griffes.

Zu erkennen ist, dass der Überstand 19 der Hülse 10 vorne in Fahrtrichtung die kreisförmige Kontur des Stopfens 20 überragt.

Der in den Zeichnungen dargestellte Stopfen kann insbesondere Teil eines Zubehörteils, wie beispielsweise eines Außenspiegels, Bedienelements oder einer Anzeigeeinrichtung sein.

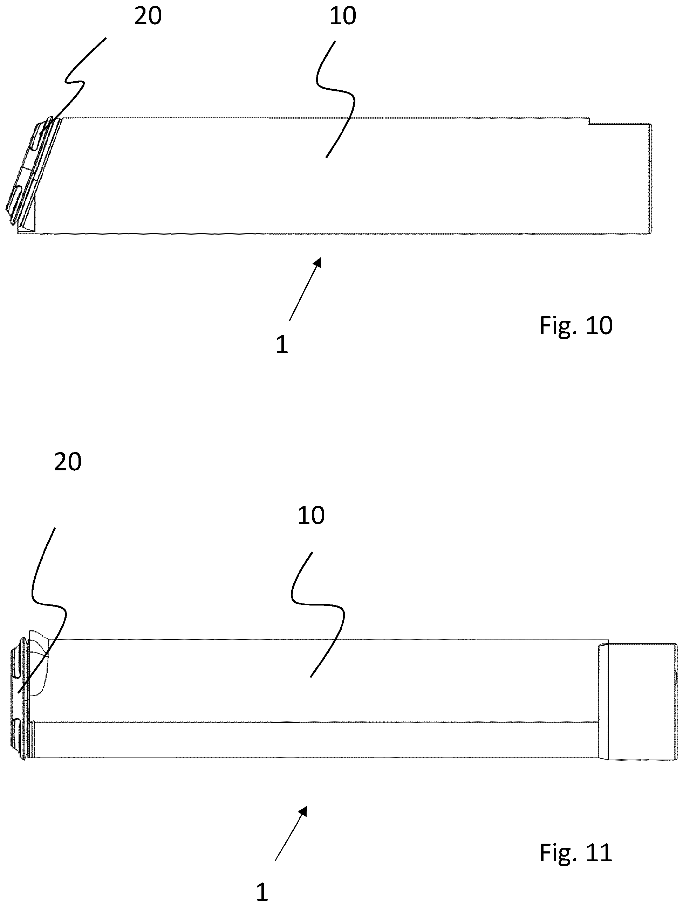

Während in den Figuren Fig. 1 bis Fig. 9 jeweils ein Griff dargestellt ist, welcher bei bestimmungsgemäßer Verwendung auf der rechten Seite am Lenker angebracht wird, zeigen die Figuren Fig. 10 bis Fig. 12 einen Griff, welcher bei bestimmungsgemäßer Verwendung links angebracht wird.

Fig. 10 zeigt dabei einen Griff, welcher von seiner Form her den in Fig. 1 bis Fig. 4 dargestellten Griff entspricht und welcher mithin ein schräg abgeschnittenes Ende umfasst.

Der Griff gemäß Fig. 11 entspricht dem in Fig. 7 bis Fig. 9 dargestellten Griff, welcher ein gerades Ende umfasst.

Die Griffe 1 haben jeweils eine spiegelsymmetrische Grundform von Hülse 10 und Stopfen 20.

Wie sich in der perspektivischen Darstellung gemäß Fig. 5 entsprechend des Ausführungsbeispiels gemäß Fig. 10 ergibt, ist der Stopfen 20 nebst Aufnahmebereich in der Hülse 10 nicht spiegelsymmetrisch ausgebildet.

Vielmehr ist der Stopfen 20 identisch und der Aufnahmebereich der Hülse 10 derart ausgebildet, dass das Bajonett zwischen Stopfen 20 und Hülse 10 in derselben Richtung öffnet und schließt, wies beim rechten Griff der Fall ist.

Dies ist insbesondere dann von Vorteil, wenn der Stopfen 20 Teil eines Zubehörteils, wie beispielsweise eines Rückspiegels, ist. Dasselbe Zubehörteil kann so sowohl für rechts als auch links verwendet werden.

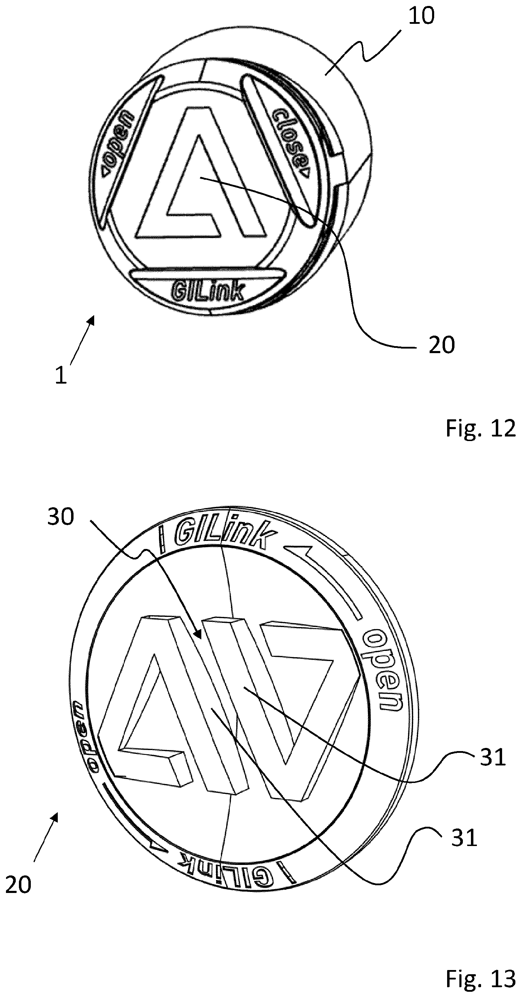

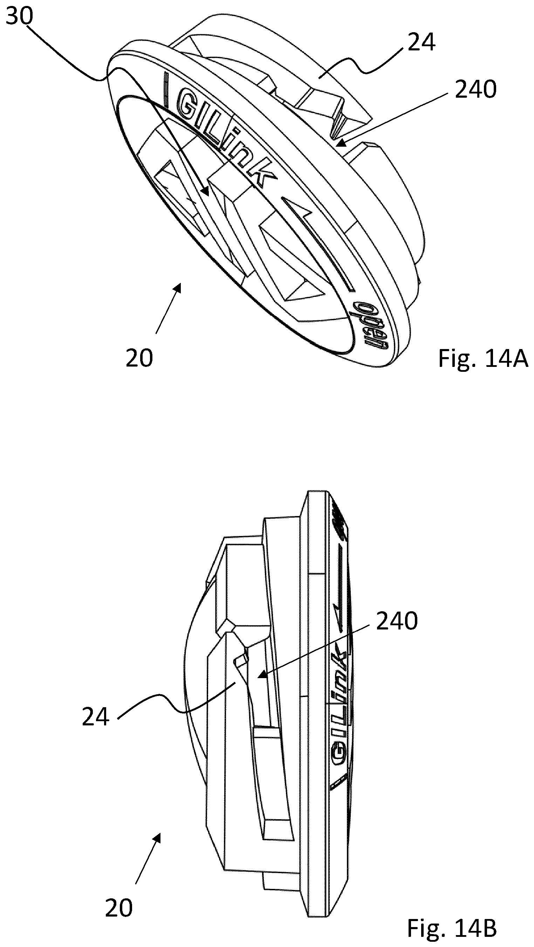

Der Stopfen 20 kann des Weiteren ein Antriebselement 30 aufweisen, das mit einem Handhabungswerkzeug (nicht dargestellt) zusammenwirkt, um den Stopfen zu montieren bzw. zu demontieren. Das Antriebselement 30 kann beispielsweise als Schlitz ausgebildet sein, in welchen eine Münze als Handhabungswerkzeug eingesetzt werden kann. Ein solcher Stopfen ist in Figur 13 gezeigt. In dem in den Figuren 13, 14A und 14B gezeigten Ausführungsbeispiel sind die Erhebungen 31 Teil des Logos, das auf die Kappe des Stopfens aufgebracht ist.

Die in den Figuren 14A und 14B gezeigte Ausführungsform der Erfindung hat einen Stopfen 20 mit einer Wendel 24, wobei der Stopfen einen Freiraum 240 aufweist, in den die Wendel 24 insbesondere bei der Montage hineinfedern kann. Gemäß der Erfindung kann ein solcher Freiraum 240 unabhängig von der Gestaltung der Wendel 24 beziehungsweise der Vertiefung oder Einkerbung 25 am Stopfen 20 vorgesehen sein.

Durch die Erfindung kann ein universell verwendbares System bereitgestellt werden, bei dem insbesondere ein einziger Stopfen für im Randbereich geometrisch verschiedenartig ausgestaltete Hülsen bereitgestellt werden kann.

### Bezugszeichenliste

- 1: Griff
- 10: Hülse
- 11: Schlitz
- 12: Aufnahmebereich
- 13: Außenfläche
- 14: Wendel
- 15: Vorsprung
- 16: Anschlag
- 17: Stufe
- 18: freier Bereich
- 19: Überstand
- 20: Stopfen
- 21: Richtungsmarkierung
- 22: Kappe
- 23: Grifffläche
- 24: Wendel
- 240: Freiraum
- 25: Vertiefung, Einkerbung
- 26: Sockel
- 27: Steg
- 28: freier Bereich
- 29: Anschlag
- 30: Antriebselement, Schlitz
- 31: Erhebung, insbesondere Logo

## Patentansprüche

1. Griff (1) für einen Fahrradlenker, umfassend eine auf den Lenker schiebbare Hülse (10), wobei durch die Hülse (10) eine Mittelachse mH definiert ist, die mit der Mittelachse des Fahrradlenkers übereinstimmt, wobei in die Hülse (10) ein als Endkappe oder Zubehöraufnahme dienender Stopfen (20) eingesetzt ist, wobei die Hülse (10) hierzu einen Aufnahmebereich (12) für den Stopfen (20) umfasst, wobei der Aufnahmebereich (12) eine Einsetzrichtung für den Stopfen (20) definiert, wodurch eine Mittelachse mA des Aufnahmebereichs (12) definiert wird, **dadurch gekennzeichnet, dass** die Mittelachse mA des Aufnahmebereichs (12) in einem schrägen Winkel α zwischen 3 und 50° zur Mittelachse mH steht.

2. Griff (1) nach dem vorstehenden Anspruch, **dadurch gekennzeichnet, dass** der Winkel α zwischen 5 und 40° und bevorzugt zwischen 10 und 30° liegt.

3. Griff (1) nach einem der vorstehenden Ansprüche, **dadurch gekennzeichnet, dass** der Stopfen (20) das Ende der Hülse (10) überragt.

4. Griff (1) nach einem der vorstehenden Ansprüche, **dadurch gekennzeichnet, dass** der Stopfen (20) formschlüssig mit der Hülse (10) verbunden ist.

5. Griff (1) nach einem der vorstehenden Ansprüche, **dadurch gekennzeichnet, dass** der Stopfen (20) mittels eines Bajonettverschlusses mit der Hülse (10) verbunden ist.

6. Griff (1) nach dem vorstehenden Anspruch, **dadurch gekennzeichnet, dass** der Bajonettverschluss ein Einrastelement aufweist.

7. Griff (1) nach dem vorstehenden Anspruch, **dadurch gekennzeichnet, dass** das Einrastelement einen Vorsprung (15) umfasst, der in einer Vertiefung (25) einrastet, wobei Vorsprung (15) und Vertiefung (25) an der Stirnseite jeweils einer Wendel (14) der Hülse (10) und des Stopfens (20) angeordnet sind.

8. Griff (1) nach einem der Ansprüche 5 - 7, **dadurch gekennzeichnet, dass** der Bajonettverschluss jeweils zwei Wendel (14) an Hülse (10) und Stopfen (20) aufweist.

9. Griff (1) nach einem der Ansprüche 5 - 8, **dadurch gekennzeichnet, dass** sich der Bajonettverschluss durch etwa eine viertel Umdrehung geöffnet bzw. geschlossen wird.

10. Set mit zwei Griffen (1) nach einem der vorstehenden Ansprüche, wobei ein Griff (1) als rechter Griff (1) und ein Griff (1) als linker Griff (1) ausgebildet ist und wobei der Stopfen (20) bei beiden Griffen (1) identisch ist.

11. Set nach dem vorstehenden Anspruch, **dadurch gekennzeichnet, dass** der Stopfen (20) beim rechten und beim Griff (1) durch Drehen in dieselbe Richtung abnehm- oder anbringbar
ist.

## Claims

1. A handle (1) for a bicycle handlebar, comprising a sleeve (10) that can be slid onto the handlebar, wherein the sleeve (10) defines a central axis mH which is coincident with the central axis of the bicycle handlebar, wherein a plug (20) serving as an end cap or accessory holder is inserted into the sleeve (10), wherein the sleeve (10) comprises a receptacle portion (12) for the plug (20) for this purpose, wherein the receptacle portion (12) defines an insertion direction for the plug (20), whereby a central axis mA of the receptacle portion (12) is defined;
**characterized in that** the central axis mA of the receptacle portion (12) lies at an oblique angle α between 3° and 50° relative to the central axis mH.

2. The handle (1) according to the preceding claim, **characterized in that** the angle α is between 5° and 40° and preferably between 10° and 30°.

3. The handle (1) according to any one of the preceding claims, **characterized in that** the plug (20) projects beyond the end of the sleeve (10).

4. The handle (1) according to any one of the preceding claims, **characterized in that** the plug (20) is connected to the sleeve (10) with a form-fit.

5. The handle (1) according to any one of the preceding claims, **characterized in that** the plug (20) is connected to the sleeve (10) by a bayonet fitting.

6. The handle (1) according to the preceding claim, **characterized in that** the bayonet fitting comprises a latching element.

7. The handle (1) according to the preceding claim, **characterized in that** the latching element comprises a projection (15) which snaps into a recess (25), the projection (15) and the recess (25) being provided on the end face of a thread (14) of the sleeve (10) and of the plug (20), respectively.

8. The handle (1) according to any one of claims 5 to 7, **characterized in that** the bayonet fitting comprises two threads (14) on each of the sleeve (10) and the plug (20).

9. The handle (1) according to any one of claims 5 to 8, **characterized in that** the bayonet fitting is opened or closed by approximately a quarter turn.

10. A set comprising two handles (1) according to any one of the preceding claims, wherein one handle (1) is designed as a right-hand handle (1) and one handle (1) is designed as a left-hand handle (1), and wherein the plug (20) is identical for both handles (1).

11. The set according to the preceding claim, **characterized in that** the plug (20) can be removed from or attached to the right-hand and left-hand handles (1) by turning it in the same direction.

## Revendications

1. Poignée (1) pour guidon de vélo, comprenant un manchon (10) enfichable sur le guidon, le manchon (10) définissant un axe central mH coïncidant avec l'axe central du guidon, un bouchon (20) servant d'embout ou de logement d'accessoire étant inséré dans le manchon (10), le manchon (10) comprenant à cet effet une zone de réception (12) pour le bouchon (20), la zone de réception (12) définissant une direction d'insertion pour le bouchon (20), un axe central mA de la zone de réception (12) étant ainsi défini, **caractérisée en ce que** l'axe central mA de la zone de réception (12) forme un angle oblique α compris entre 3° et 50° par rapport à l'axe central mH.

2. Poignée (1) selon la revendication précédente, **caractérisée en ce que** l'angle α est compris entre 5° et 40° et de préférence entre 10° et 30°.

3. Poignée (1) selon l'une quelconque des revendications précédentes, **caractérisée en ce que** le bouchon (20) fait saillie au-delà de l'extrémité du manchon (10).

4. Poignée (1) selon l'une quelconque des revendications précédentes, **caractérisée en ce que** le bouchon (20) est relié au manchon (10) par ajustement de forme.

5. Poignée (1) selon l'une quelconque des revendications précédentes, **caractérisée en ce que** le bouchon (20) est relié au manchon (10) par un raccord à baïonnette.

6. Poignée (1) selon la revendication précédente, **caractérisée en ce que** le raccord à baïonnette comporte un élément d'encliquetage.

7. Poignée (1) selon la revendication précédente, **caractérisée en ce que** l'élément d'encliquetage comprend une saillie (15) s'encliquetant dans un évidement (25), la saillie (15) et l'évidement (25) étant disposés sur la face frontale d'une hélice (14) respective du manchon (10) et du bouchon (20).

8. Poignée (1) selon l'une quelconque des revendications 5 à 7, **caractérisée en ce que** le raccord à baïonnette comporte deux hélices (14) sur chacun, le manchon (10) et le bouchon (20).

9. Poignée (1) selon l'une quelconque des revendications 5 à 8, **caractérisée en ce que** le raccord à baïonnette s'ouvre ou se ferme d'environ un quart de tour.

10. Ensemble comprenant deux poignées (1) selon l'une quelconque des revendications précédentes, dans lequel une poignée (1) est conçue comme une poignée droite (1) et une poignée (1) est conçue comme une poignée gauche (1), et dans lequel le bouchon (20) est identique pour les deux poignées (1).

11. Ensemble selon la revendication précédente, **caractérisé en ce que** le bouchon (20) peut être retiré ou fixé aux poignées droite et gauche (1) en le tournant dans le même sens.
